# FASCICULE DE BREVET EUROPEEN

(11) **EP 0 779 950 B1**
(45) Date de publication et mention de la délivrance du brevet: **23.12.1998**
(21) Numéro de dépôt: 95929927.2
(22) Date de dépôt: 05.09.1995
(51) Int. Cl.: F16B 2/08, E04D 13/08, F16L 3/133

(54) **BAGUE DE FIXATION**
BEFESTIGUNGSRING
RING FASTENER

(30) Priorité: 09.09.1994 FR 9410805
(43) Date de publication de la demande: 25.06.1997
(73) Titulaire: UNION MINIERE FRANCE S.A., F-93176 Bagnolet (FR)
(72) Inventeur: DUBRAC, Claude, F-27630 Fourges (FR); DELAMARRE, Martial, F-95710 Bray-Et-Lu (FR)
(74) Mandataire: Desrousseaux, Grégoire Marie
(86) Numéro de dépôt international: FR9501147
(87) Numéro de publication internationale: WO9607829

(56) Documents cités:
- FR-A- 2 591 514
- GB-A- 613 940
- GB-A- 724 433
- NL-A- 7 411 759
- US-A- 2 922 212

## Description

La présente invention a pour objet une bague de fixation d'un tuyau sur un mur.

De telles bagues sont notamment utilisées dans le bâtiment pour la fixation des tuyaux de descente d'eau. Elles peuvent plus généralement être utilisées pour la fixation de tout tuyau.

Le document FR-B-2 591 514 décrit un dispositif pour permettre la pose d'un tuyau de descente d'eau. Dans ce document, le dispositif comprend une bague non soudée extensible présentant deux bossages, ainsi qu'un collier de serrage classique. Lors de la pose, la bague non soudée est disposée autour du tuyau de descente d'eau, et l'ensemble est ensuite serré dans le collier de serrage.

Ce dispositif permet d'éviter toute opération de soudage sur le tuyau de descente. Il présente néanmoins les inconvénients suivants.

Il implique l'utilisation de nombreuses pièces: il est nécessaire de disposer de la bague extensible, et d'un collier. Le collier comprend habituellement deux demi cercles, dont l'un est destiné à être fixé dans le mur, et des moyens de fixation, tels que des vis ou des écrous.

Ce dispositif est en outre très visible, du fait de la présence du collier et de ses moyens de fixation: ceci pose un problème dans la conception des bâtiments, où l'une des contraintes techniques est parfois la discrétion des descentes d'eau.

Ce dispositif n'assure pas une grande sécurité: les moyens de fixation du collier sont visibles et peuvent facilement être manipulés. Dans ce cas, le tuyau de descente risque de glisser dans la bague. Par ailleurs, le tuyau risque aussi de descendre si les moyens de fixation du collier ne sont pas serrés de façon appropriée. Si le collier est trop serré, le tuyau des descente peut être endommagé.

Le montage de ce genre de dispositif demande donc une pratique certaine, et les contraintes de pose sont importantes.

Le document GB-A-613 940 décrit un tuyau de descente des eaux, formé en repliant une tôle et en la munissant sur toute sa longueur d'une bande ce clôture, pour éviter toute soudure. On peut prévoir en outre un dispositif de fixation sur un mur, formé autour du tuyau par une bague, et fermé par une bande de clôture assurant en même temps la fermeture du tuyau. Ce dispositif est difficilement démontable, et n'est adapté qu'à des tuyaux non-soudés.

Le document GB-A-724 433 décrit un dispositif de fixation de câbles sur une plaque perpendiculaire à la direction du câble; ce dispositif est formé de nombreux éléments; il n'est pas facilement démontable car il utilise un asemblage par vis, et n'est pas non plus autobloquant.

Un des buts de l'invention est de pallier ces différents inconvénients.

L'invention fournit une bague de fixation ne présentant qu'un nombre de pièces réduit, ce qui facilité sa fabrication et son montage.

La bague de l'invention est d'une grande discrétion, et une fois montée est quasiment invisible.

La bague de l'invention est d'un montage très simple, n'impliquant aucun savoir-faire particulier.

Enfin, l'invention apporte une solution au problème du blocage des tuyaux de descente, en assurant un maintien sûr des tuyaux. La bague de l'invention reste néanmoins facilement démontable.

L'invention a pour objet une bague de fixation d'un tuyau sur un mur, comprenant :
- une virole cylindrique présentant une fente longitudinale trapézoïdale, et des replis le long de la dite fente;
- une clef destinée à être fixée sur le mur, de forme trapézoïdale et présentant sur ses côtés non parallèles des replis destinés à coopérer avec les replis de ladite virole.

Selon un mode de réalisation, la virole présente en outre des bossages.

Selon un autre mode de réalisation, les replis de la virole sont dirigés vers l'intérieur de la virole, les replis de la dite clef étant dirigés du côté destiné à se trouver face au mur.

Selon encore un mode de réalisation les replis de la dite virole sont dirigés vers l'extérieur de la virole, les replis de la dite clef étant dirigés du côté destiné à se trouver opposé au mur.

La dite clef peut comprendre des moyens de fixation sur le mur constitués d'un écrou soudé sur la dite clef, et d'une patte à vis montée par vissage dans le dit écrou.

L'invention a aussi pour objet un procédé de fixation d'un tuyau sur un mur à l'aide d'une telle bague, comprenant les étapes consistant à:
- fixer sur le mur la clef, le plus grand des côtés parallèles de la clef étant disposé vers le haut;
- disposer autour du tuyau la virole, le plus grand des côtés parallèles de la fente étant disposé vers le haut;
- engager par le haut la dite virole dans la dite clef, en faisant coopérer les replis de la virole et les replis de la clef.

D'autres caractéristiques et avantages de l'invention apparaîtront à la lecture de la description qui suit d'un mode de réalisation, donnée à titre d'exemple et en référence à la figure annexée, qui montre une vue en perspective éclatée d'une bague selon l'invention.

La figure montre une vue en perspective éclatée d'une bague selon l'invention. La bague de la figure comprend une virole 1, ainsi qu'une clef 2 destinée à être fixée sur le mur.

La virole 1 présente une forme cylindrique, adaptée à la forme du tuyau à fixer sur le mur. Dans l'exemple de réalisation représenté sur les figures, la virole 1 a la forme d'un cylindre de révolution et est adaptée à la fixation d'un tuyau de section circulaire. La virole 1 pourrait aussi être cylindrique mais de section ovale ou carrée, en fonction de la forme du tuyau.

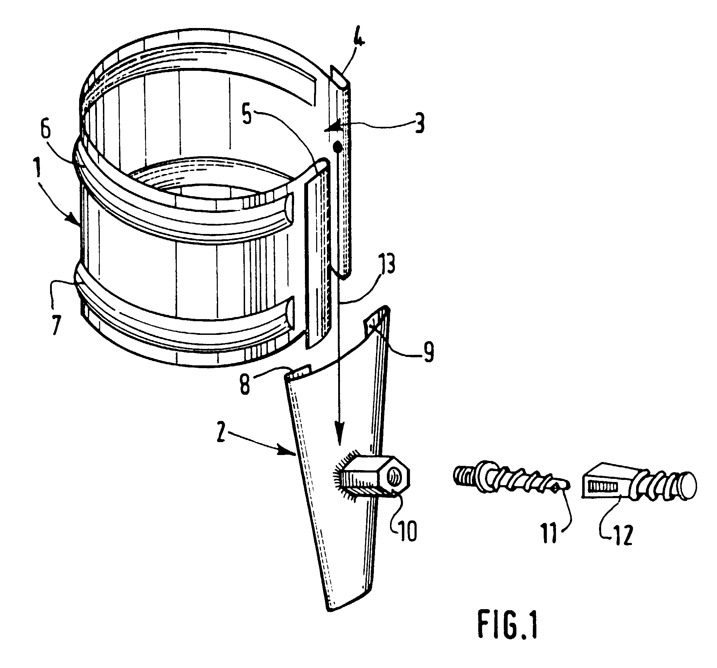

La virole 1 présente une fente 3 longitudinale, i.e. qui s'étend d'une extrémité de la virole 1 à l'autre extrémité. Dans l'exemple de la figure 1, la fente 3 est parallèle à l'axe de la virole 1. Elle pourrait aussi être décalée par rapport à cet axe. La fente 3 peut avoir une forme rectangulaire ou de préférence trapézoïdale.

Le long de la fente 3, la virole 1 présente des replis 4 et 5. Ces replis, dans l'exemple de la figure 1, sont formée en repliant le bord de la virole sur toute la longueur de la fente.

La virole 1 présente des bossages 6, 7 le long de ses extrémités supérieure et inférieure. Ces bossages permettent une meilleure préhension de la virole 1. Ils assurent aussi une continuité d'allure de la virole 1, par rapport aux dispositifs connus, tels que le dispositif au brevet mentionné plus haut. L'invention peut être réalisée sans ces bossages.

La clef 2 de la figure 1 présente une forme généralement trapézoïdale. Le long de ses côtés non parallèles, la clef 2 présente des replis 8, 9 destinés à coopérer avec les replis 5, 4 de la virole 1.

Dans le mode de réalisation de la figure, les replis 4, 5 de la virole 1 sont dirigés vers l'extérieur de la virole, et les replis 8, 9 de la clef 2 sont dirigés vers le côté de la clef destiné à se trouver opposé au mur. Dans un autre mode de réalisation, les replis 4, 5 de la virole 1 pourraient être dirigés vers l'intérieur de la virole, et les replis 8, 9 de la clef être dirigés vers le côté de la clef destiné à se trouver face au mur.

La clef 2 est destinée à être fixée au mur. Dans le mode de réalisation de la figure ont été prévus pour cela des moyens de fixation, comprenant un écrou 10, soudé sur la clef 2, et une patte à vis 11, susceptible d'être vissée dans ledit écrou. D'autres modes de fixation sont accessibles à l'homme du métier pour fixer la virole 2 sur le mur.

On décrit maintenant le mode de fixation d'un tuyau de descente sur un mur, à l'aide de la bague représentée à la figure.

On commence par fixer sur le mur la clef 2. Dans l'exemple de mode de fixation de la figure, ceci se fait en perçant un trou dans le mur et en y introduisant une cheville 12. On dispose ensuite la patte de fixation 11 dans la cheville 12 d'une part et dans l'écrou 10 d'autre part, de façon à fixer la clef 2 sur le mur. On dispose la clef 2 sur le mur de telle sorte que le plus grand des côtés parallèles du trapèze soit vers le haut, autrement dit que les côtés non parallèles du trapèze convergent vers le bas.

On dispose ensuite la virole 1 autour du tuyau. Dans le mode de réalisation préféré où la fente 3 dans la virole 1 a une forme trapézoïdale, on dispose le plus grand des côtés parallèles en haut; autrement dit, les côtés non parallèles de la fente trapézoïdale convergent vers le bas;

On engage ensuite par le haut dans la clef 2 la virole 1 entourant le tuyau, en faisant coopérer les replis 4, 5 de la virole avec les replis 9, 8 de la clef. Lorsque la virole 1 descend par rapport à la clef 2 dans le sens indiqué par la flèche 13 sur la figure, elle serre en même temps le tuyau, du fait de la forme trapézoïdale de la clef. Plus la virole descend, plus elle serre le tuyau. La bague de fixation de l'invention constitue donc un système autobloquant, qui assure un maintien correct du tuyau, sans nécessiter de réglage particulier, ni aucun savoir faire au moment de la fixation. Il n'y a aucun risque que le tuyau fixé selon l'invention puisse descendre par rapport à la bague. Si jamais le tuyau avait tendance à descendre, il entraînerait la virole 1, ce qui conduirait à un serrage plus important, empêchant tout mouvement.

Toutefois, la bague de fixation selon l'invention reste facilement démontable, en déplaçant la virole par rapport à la clef dans le sens opposé à la flèche 13 de la figure.

Après démontage on peut facilement récupérer les éléments de la bague, et en tout état de cause la virole 1 et la clef 2.

Dans l'exemple de la figure, la clef 2 présente une forme trapézoïdale, et la fente 3 de la virole 1 peut présenter une forme rectangulaire ou trapézoïdale. Alternativement, la fente 3 pourrait être trapézoïdale, et la clef 2 pourrait dans ce cas présenter une forme rectangulaire ou trapézoïdale.

L'essentiel, pour l'invention, est que la virole 1 serre le tuyau lorsqu'elle se déplace par rapport à la clef 2.

La virole 1 peut être réalisée par emboutissage et cintrage d'une tôle de zinc d'épaisseur 0,65 mm, et la clef 2 par cintrage et repliement d'une tôle galvanisée 8/10. Ces choix permettent notamment d'assurer simplement le soudage de l'écrou 10 sur la clef 2. On pourrait utiliser tout autre type de métal ou un autre matériau pour réaliser l'invention.

On peut avantageusement utiliser des viroles de longueurs différentes, selon la taille des tuyaux à fixer. Les replis peuvent être continus, comme dans le mode de réalisation de la figure Ils peuvent aussi être partiels, i.e. ne pas s'étendre sur toute la longueur de la fente de la virole, ou sur tout le côté de la clef. On peut ainsi utiliser comme replis simplement des pattes. L'angle entre les côtés inclinés de la virole et l'axe de la virole et/ou l'angle entre les côtés inclinés de la clef ou de la clef peuvent prendre par exemple une valeur de l'ordre de 10°; cette valeur assure un serrage efficace et permet une mise en place facile.

La bague selon l'invention permet d'assurer une fixation discrète et autobloquante.

## Revendications

1. Bague de fixation d'un tuyau sur un mur, constituée de:
- une virole (1) cylindrique présentant une fente (3) longitudinale trapézoïdale, et des replis (4, 5) le long de la dite fente;
- une clef (2) destinée à être fixée sur le mur, de forme trapézoïdale ouverte vers le haut et présentant sur ses côtés non parallèles des replis (9, 8) destinés à coopérer, de façon démontable, avec les replis (4, 5) de ladite virole (1).

2. Bague selon la revendication 1, caractérisée en ce que la virole (1) présente en outre des bossages (6, 7).

3. Bague selon la revendication 1 ou 2, caractérisée en ce que les replis (4, 5) de la virole (1) sont dirigés vers l'intérieur de la virole, les replis (9, 8) de la dite clef (2) étant dirigés du côté destiné à se trouver face au mur.

4. Bague selon la revendication 1 ou 2, caractérisée en ce que les replis (4, 5) de la virole (1) sont dirigés vers l'extérieur de la virole, les replis (9, 8) de la dite clef (2) étant dirigés du côté destiné à se trouver opposé au mur.

5. Bague selon l'une des revendication 1 à 4, caractérisée en ce que la dite clef (2) comprend des moyens de fixation sur le mur comprenant un écrou (10) soudé sur la dite clef (2), et une patte à vis (11) montée par vissage dans le dit écrou (10).

6. Procédé de fixation d'un tuyau sur un mur à l'aide d'une bague selon l'une des revendication 1 à 5, comprenant les étapes consistant à:
- fixer sur le mur la clef (2), le plus grand des côtés parallèles de la clef étant disposé vers le haut;
- disposer autour du tuyau la virole (1), le plus grand des côtés parallèles de la fente (3) étant disposé vers le haut;
- engager par le haut la dite virole (1) dans la dite clef (2), en faisant coopérer les replis (4, 5) de la virole et les replis (9, 8) de la clef.

## Patentansprüche

1. Befestigungsring für ein Rohr an eine Wand, bestehend aus:
- einem zylindrischen Rohrring (1) mit einem trapezförmigen Längsspalt (3), und Umschlägen (4, 5) entlang des Spaltes;
- einem trapezförmigen, nach oben hin offenen, an die Wand anzubringenden Schlüssel (2), der auf den nicht parallelen Seiten Umschläge (9,8) aufweist für das herausnehmbare Einwirken mit den Umschlägen des Rohrrings (1).

2. Befestigungsring gemäß Anspruch 1, dadurch gekennzeichnet, daß der Rohrring (1) außerdem Wölbungen (6, 7) aufweist.

3. Befestigungsring gemäß Anspruch 1 oder 2, dadurch gekennzeichnet, daß die Umschläge (4,5) des Rohrrings (1) in das Innere des Rohrrings weisen, wobei die Umschläge (9, 8) des Schlüssels (2) auf die Wand hinweisen werden.

4. Befestigungsring gemäß Anspruch 1 oder 2, dadurch gekennzeichnet, daß die Umschläge (4,5) des Rohrrings (1) in das Äußere des Rohrrings weisen, wobei die Umschläge (9, 8) des Schlüssels (2) von der Wand wegweisen werden.

5. Befestigungsring gemäß mindestens einem der Ansprüche 1 bis 4. dadurch gekennzeichnet, daß der Schlüssel (2) Befestigungsmittel für die Befestigung an die Wand umfasst, umfassend eine auf den Schlüssel (2) aufgeschweißte Mutter (10) und eine Schraubenverbindung (11), die in die Mutter (10) eingeschraubt ist.

6. Verfahren zur Befestigung eines Rohres an eine Wand mithilfe eines Ringes gemäß mindestens einem der Ansprüche 1 bis 5, umfassend die Schritte, die darin bestehen:
- Befestigen des Schlüssels (2) an die Wand, wobei die größere der parallelen Seiten des Schlüssels oben angeordnet ist;
- Anordnen um das Rohr des Rohrringes (1) herum, wobei die größere der parallelen Seiten des Spaltes (3) oben angeordnet ist;
- Eingriff von oben des Rohrrings (1) in den Schlüssel (2) unter Einwirkung der Umschläge (4, 5) des Rohrrings und der Umschläge (9,8) des Schlüssels.

## Claims

1. Ring for fastening a pipe to a wall, constituted by:
- a cylindrical hoop (1) having a longitudinal trapezoidal slot (3), and folded portions (4, 5) extending therealong;
- a brace (2) to be fixed on said wall, of trapezoidal shape and upwardly open, and having on parallel sides thereof, folded portions (9, 8) designed to releasably cooperate with said folded portions (4, 5) of said hoop (1).

2. The ring according to claim 1, characterized in that said hoop (1) additionally includes enlarged portions (6, 7).

3. The ring according to claim 1 or 2, characterized in that said folded portions (4, 5) of said hoop (1) are directed inwardly thereof, said folded portions (9, 8) on said brace (2) being directed to the side designed to be facing said wall.

4. The ring according to claim 1 or 2, characterized in that said folded portions (4, 5) of said hoop (1) are directed outwardly thereof, said folded portions (9, 8) on said brace (2) being directed to the side designed to be away from said wall.

5. The ring according to one of claims 1 to 4, characterized in that said brace (2) comprises means for fixing it on said wall, comprising a nut (10) welded on said brace (2), and a threaded pin (11) mounted by screwing into said nut (10).

6. Method for fastening a pipe to a wall using a ring according to one of claims 1 to 5, comprising the steps consisting of :
- fastening said brace (2) to the wall, the largest of the parallel sides of said brace being upwardly facing;
- placing said hoop (1) around said pipe, with the largest of the parallel sides of said slot (3) being upwardly facing;
- applying, from the top, said hoop (1) into said brace (2), by causing said folded portions (4, 5) of the hoop to cooperate with the folded portions (9, 8) of the brace.
